# EUROPÄISCHE PATENTSCHRIFT

(11) **EP 3 053 838 B1**
(45) Veröffentlichungstag und Bekanntmachung des Hinweises auf die Patenterteilung: **05.12.2018**
(21) Anmeldenummer: 16000166.5
(22) Anmeldetag: 25.01.2016
(51) Int. Cl.: B65B 19/02, B65B 59/04, B65B 65/00, G05B 19/418, B23Q 1/01

(54) **MODULARE VORRICHTUNG ZUM VERPACKEN VON ZIGARETTEN ODER ZIGARETTEN- PACKUNGEN**
MODULAR DEVICE FOR PACKAGING CIGARETTES OR CIGARETTE PACKAGES
DISPOSITIF MODULAIRE D'EMBALLAGE DE CIGARETTES OU DE PAQUETS DE CIGARETTES

(30) Priorität: 05.02.2015 DE 102015001312
(43) Veröffentlichungstag der Anmeldung: 10.08.2016
(73) Patentinhaber: Focke & Co. (GmbH & Co. KG), 27283 Verden (DE)
(72) Erfinder: SCHMIDT, Jens, 28879 Grasberg (DE); RUTKOWSKI, Ramon, 29643 Neuenkirchen (DE)
(74) Vertreter: Aulich, Martin

(56) Entgegenhaltungen:
- EP-A1- 0 994 033
- WO-A1-97/46352
- DE-U1- 29 903 339

## Beschreibung

Die vorliegende Erfindung betrifft eine modulare Vorrichtung zum Verpacken von Zigaretten oder Zigarettenpackungen sowie ein Fertigungsmodul für eine solche Vorrichtung.

Im Stand der Technik sind aus einzelnen Modulen bestehende Maschinen bekannt. Im Zusammenhang mit der Herstellung von Zigarettenpackungen besteht ein immer größerer Bedarf, die eingesetzten Verpackungsmaschinen schnell und mit möglichst geringem Aufwand an grundlegend unterschiedliche Packungsarten anpassen zu können, ohne aufwendige Umbaumaßnahmen vornehmen zu müssen. Modular aufgebaute Maschinen sind hier von großem Vorteil.

Die EP 0 994 033 A1 zeigt eine modulare Vorrichtung zum Verpacken von Zigaretten oder Zigarettenpackungen mit mehreren Fertigungsmodulen. Nachteilig ist unter anderem, dass der Zugang zu Einzelmodulen schwierig ist, da für Werker keine besonderen Laufwege vorgesehen sind.

Die DE 299 03 339 U1 zeigt keine modulare Vorrichtung, sondern eine Werkzeugmaschine. Um die Zugänglichkeit zur Werkzeugmaschine zu gewährleisten ist zwischen einem Schaltschrank der Werkzeugmaschine und einem Schaltschrankrahmen eine erhöhte Plattform angeordnet.

Die WO 97/46352 A1 zeigt einen Schaltschrank, der auf einem Boden der Fertigungseinheit steht.

Es ist Aufgabe der vorliegenden Erfindung, eine modulare Vorrichtung zum Verpacken von Zigaretten oder Zigarettenpackungen anzugeben, die möglichst problemlos und schnell auf andere Packungstypen umrüstbar ist.

Diese Aufgabe wird gelöst durch eine modulare Vorrichtung mit den Merkmalen des Anspruchs 1 sowie ein Fertigungsmodul für eine solche Vorrichtung mit den Merkmalen des Anspruchs 12.

Danach weist eine erfindungsgemäße Vorrichtung zum Verpacken von Zigaretten oder Zigarettenpackungen jeweils mehrere Fertigungsmodule auf, wobei jedes Fertigungsmodul über eine Fertigungseinheit zur Durchführung mindestens eines Fertigungsschrittes verfügt, wobei mindestens ein Fertigungsmodul, bevorzugt mehrere Fertigungsmodule, über einen der Fertigungseinheit zugeordneten, von dieser beabstandeten Schaltschrank aufweisen, der über elektronische/elektrische Bauteile zum Betrieb der Fertigungseinheit verfügt, und wobei zwischen der Fertigungseinheit und dem diesem jeweils zugeordneten Schaltschrank des Fertigungsmoduls, eine gegenüber dem Niveau des Bodens, auf dem die Fertigungseinheit steht, erhöhte, einen begehbaren Laufweg für einen Werker bildende Plattform angeordnet ist.

Die vorgenannten Fertigungsmodule können dabei verschiedene Funktionen aufweisen. Wenn es sich bei der Vorrichtung um einen Packer zur Verpackung von Zigaretten Zigarettenpackungen handelt, etwa einen Hinge-Lid-Packer, kann ein Modul beispielsweise für die Formierung von aus einem Zigarettenmagazin stammenden Zigaretten zu Zigarettengruppen sorgen, ein Modul für das Einhüllen der Zigaretten in einen Innenzuschnitt, wie etwa Stanniol, ein Modul für das Aufbringen eines Kragen auf die in den Innenzuschnitt eingehüllte Zigarettengruppe und ein Modul für das Verpacken des Stanniolblocks in einen Außenzuschnitt, etwa einen Kartonzuschnitt. Die Aufteilung der Vorrichtung in die einzelnen Module kann aber auch auf andere Weise erfolgen. So kann beispielsweise das Außenzuschnittmodul zusätzlich auch noch den sogenannten Kragen aufbringen. Das Formierungsmodul könnte beispielsweise zusätzlich, etwa bei der Herstellung einer Dichtpackung, noch den sogenannten Tray herstellen, der zur Aufnahme der Zigarettengruppe dient und der anschließend in einen Dichtfolien-Innenzuschnitt eingehüllt wird.

Die Moduleigenschaft der Fertigungsmodule kann sich unter anderem darin zeigen, dass die Module als eigenständige funktionale bzw. technische Einheiten gebildet sind. Insbesondere können die Elektrik/Elektronik sowie die Antriebe der Fertigungsmodule - unter anderem abgesehen von einer Anbindung an eine übergeordnete Maschinensteuerung und eine mögliche übergeordnete Stromversorgung - im Wesentlichen autark strukturiert sein, sodass jedes Fertigungsmodul insofern als komplette Einheit aus der Verpackungsmaschine entfernbar, in diese integrierbar oder durch ein anderes, insbesondere durch ein identisches oder durch ein funktional gleichartiges Modul austauschbar/ersetzbar ist.

Beispielsweise durch das Austauschen von einzelnen Modulen einer solchen Verpackungsmaschine durch funktional gleichartige Module können bei Beibehaltung anderer Module letztlich mit derselben Maschine unterschiedliche Packungstypen hergestellt werden, wie etwa einerseits eine Standard Hinge-Lid-Packung oder anderseits eine Dichtpackung. Bei einem solchen Wechsel von einer ersten Packungsart zu einer zweiten Packungsart können auch zusätzliche Fertigungsmodule in die modulare Verpackungsmaschine bzw. in den Fertigungsfluss integriert werden oder einzelne Fertigungsmodule ersatzlos aus der Maschine entfernt werden. Der modulartige Aufbau ermöglicht auch im Rahmen der Wartung oder Reparatur einen schnellen Austausch von einzelnen, von substantiellen Fehlern betroffenen Fertigungsmodulen durch jeweils identische, fehlerfreie Fertigungsmodule.

Mindestens ein, bevorzugt jedes Fertigungsmodul verfügt erfindungsgemäß über jeweils einen eigenen (separaten) Schaltschrank, in dem (insbesondere nur) elektronische und elektrische Komponenten zum Betrieb des Fertigungsmoduls enthalten sind, zu dem der Schaltschrank gehört.

Die insbesondere in Bezug auf den Schaltschrank separate Fertigungseinheit verfügt bevorzugt jeweils über mindestens ein, in der Regel mehrere Fertigungsmittel, die zur Durchführung der von dem Fertigungsmodul vorzunehmenden Fertigungsschritte dienen. Der Begriff Fertigungsmittel ist dabei allgemein zu verstehen und umfasst insbesondere Förderer, Faltorgane, Prüforgane. Trennorgane, Siegelorgane, Leimauftragsorgane und dergleichen. Beispielsweise würde die Fertigungseinheit eines Innenzuschnittmoduls über die geeigneten, im Stand der Technik bekannten Fertigungsmittel zum Einhüllen einer Zigarettengruppe in einen Innenzuschnitt verfügen (beispielsweise ggf. Faltorgane zum Falten des Innenzuschnitts, ggf. Trennorgane zum Abtrennen einzelner Innenzuschnitt, ggf. Siegelorgane, ggf. Leimauftragsorgane etc.).

Bevorzugt weisen dabei die Fertigungsmodule - wie oben bereits angedeutet - jeweils einen oder mehrere eigene, bevorzugt elektrische bzw. elektronische Antriebe auf, insbesondere Servoantriebe, zum Antrieb von Fertigungsmitteln der Fertigungseinheit.

Mindestens eine, bevorzugt jede Fertigungseinheit jedes Fertigungsmoduls verfügt über eine Bedienseite und eine Rückseite. Was die oben genannte, erhöhte Plattform betrifft, auf der ein Werker stehen kann und die zwischen der Fertigungseinheit und dem dieser jeweils zugeordneten Schaltschrank des Fertigungsmoduls angeordnet ist, so ist diese bevorzugt einer bzw. der Rückseite der Fertigungseinheit zugeordnet und dabei zwischen der Rückseite der Fertigungseinheit und dem Schaltschrank angeordnet.

Die Plattform ist dabei durch ein oder mehrere Plattenelemente bzw. Bodenplatten gebildet, die an mindestens einem, insbesondere mit der Fertigungseinheit verbundenen Tragelement der Fertigungseinheit angeordnet bzw. befestigt sind. Die Bodenplatten können insbesondere auf dem mindestens einen Tragelement aufliegen. Die Tragelemente sind vorzugsweise Bestandteil der Fertigungseinheit. Sie können beispielsweise mit dem Grundgestell der Fertigungseinheit verbunden bzw. Bestandteil desselben sein.

Die Tragelemente sind als Tragarme ausgebildet. Die Plattform ist dann gebildet durch eine oder mehrere, auf mindestens zwei Tragarmen aufgelegte Plattenelemente.

Das Grundgestell wiederum bildet vorzugsweise zusammen mit entsprechenden, mit dem Grundgestell verbundenen Verkleidungen (insbesondere Verkleidungsplatten bzw. Verkleidungsblechen) ein Gehäuse der Fertigungseinheit, durch das Abschnitte von zwischen dem Schaltschrank und der Fertigungseinheit verlaufenden Stromversorgungsleitungen und/oder von Steuerungsleitungen als Kabel geführt sind.

In weiterer Ausbildung der Erfindung sind die vorgenannten Stromversorgungsleitungen und/oder Steuerungsleitungen im Bereich zwischen dem Schaltschrank und der Fertigungseinheit des Fertigungsmoduls unterhalb der Plattform von dem Schaltschrank zu der Fertigungseinheit geführt. Hierdurch verschwinden diese Leitungen elegant aus dem Sichtbereich und stellen keine Gefährdung dar.

Vorzugsweise verlaufen von dem Schaltschrank ausschließlich Stromversorgungsleitungen und/oder Steuerungsleitungen zu der dem Schaltschrank zugeordneten Fertigungseinheit, nicht aber Leitungen zu anderen Fertigungseinheiten der modularen Vorrichtung. Auf diese Weise ist ein separater Austausch eines Fertigungsmoduls möglich, ohne dass hierbei zu anderen Fertigungsmodulen verlaufende Leitungen getrennt werden müssen.

Zwischen dem Schaltschrank und der Fertigungseinheit und/oder (das Zeichen "/" ist als "oder" zu verstehen) zwischen dem Schaltschrank und einer übergeordneten Maschinensteuerung verlaufen Stromversorgungsleitungen und/oder Steuerungsleitungen, die die elektrischen/elektronischen Bauteile des Schaltschranks mit der Fertigungseinheit und/oder mit der übergeordneten Maschinensteuerung verbinden. Insbesondere mit elektrischen/elektronischen Bauteilen der Fertigungseinheit und/oder der Maschinensteuerung.

Dabei weisen die Leitungen insbesondere jeweils im Bereich des Schaltschranks und/oder im Bereich der Fertigungseinheit und/oder im Bereich der Maschinensteuerung zwei lösbar miteinander verbundene Verbindungsmittel auf, insbesondere zwei Verbindungsteile einer Steckverbindung. Hierdurch ist es beispielsweise möglich, die vorgenannte "Verdrahtung" zwischen diesen Baugruppen bei Bedarf in einfacher Weise zu lösen und beispielsweise ggf. nur die Fertigungseinheit oder nur den Schaltschrank eines Fertigungsmoduls zu tauschen.

Was die oben bereits erwähnte Plattform betrifft, so kann sie lückenlos oder im Wesentlichen lückenlos zwischen der Fertigungseinheit einerseits und dem Schaltschrank andererseits angeordnet sein und insbesondere lückenlos oder im Wesentlichen lückenlos an die Fertigungseinheit einerseits und den Schaltschrank andererseits angrenzen.

Der Schaltschrank kann insbesondere zu Transportzwecken derart bewegbar gelagert sein, insbesondere an der Fertigungseinheit, dass der Abstand zwischen Schaltschrank und Fertigungseinheit durch Relativbewegung zwischen diesen beiden veränderbar, insbesondere verringerbar ist. Beispielsweise durch Bewegung des Schaltschranks in Richtung der ortsfesten Fertigungseinheit. Diese Bewegung kann auch motorisch angetrieben sein bzw. es kann vorgesehen sein, dass das Fertigungsmodul eine motorisch angetriebene Verfahreinrichtung aufweist, die diese Bewegung des Schaltschranks bewirkt.

In einer Ausführungsform die nicht Teil der Erfindung ist, kann zu Transportzwecken die erhöhte Plattform vollständig oder teilweise entfernt werden bzw. entfernbar ausgebildet sein oder jedenfalls kann die Breite des zwischen der Fertigungseinheit und dem Schaltschrank befindlichen (sichtbaren) Bereichs der erhöhten Plattform reduzierbar sein. Letzeres könnte beispielsweise (jedoch nicht im Umfang der Erfindung) jedenfalls theoretisch auch dadurch erfolgen, dass der Schaltschrank auf Rollen gelagert ist, als Ganzes in Richtung der Fertigungseinheit verfahren wird, und die Plattform dabei in Ausnehmungen oder freie Bereiche oder Hohlräume innerhalb des Schaltschranks eintaucht.

Erfindungsgemäß ist vorgesehen, dass in einer Transportstellung des Fertigungsmoduls die Unterseite des Schaltschranks wenigstens bereichsweise auf mindestens einem Plattenelement der erhöhten Plattform aufliegt und an dieser lösbar befestigt ist. Zu diesem Zweck kann vorgesehen sein, dass ausgehend von einer Normal- oder Fertigungsstellung des Fertigungsmoduls, in der sich die erhöhte Plattform zwischen Schaltschrank und zugeordneter Fertigungseinheit befindet, das Plattenelement von dem mindestens einem Tragelement zeitweise entfernt bzw. gelöst und an der Unterseite des Schaltschranks lösbar befestigt wird, beispielsweise durch Verschraubung. Anschließend wird das Plattenelement (zusammen mit dem Schaltschrank) unter Reduzierung der Breite des sichtbaren Bereichs zwischen Schaltschrank und Fertigungseinheit wieder an dem mindestens einen Tragelement angeordnet bzw. befestigt, und zwar in seiner ursprünglichen Position.

Zudem kann vorgesehen sein, dass der Schaltschrank in der Transportstellung des Fertigungsmoduls zusätzlich an der Fertigungseinheit lösbar befestigt ist, insbesondere an einem oder dem Gehäuse der Fertigungseinheit. So könnte beispielsweise das Schaltschrankgehäuse über einen als Transportsicherung verwendeten Winkel lösbar mit dem Gehäuse der Fertigungseinheit verbunden sein.

Vorzugsweise sind insbesondere an der Fertigungseinheit Führungsmittel angeordnet, die den Schaltschrank während einer Bewegung des Schaltschranks seitlich führen, nämlich in der Richtung quer zu der abstandsverringernden Bewegungsrichtung des Schaltschranks. Es können des Weiteren Begrenzermittel vorgesehen sein, die die Bewegung des Schaltschranks in der abstandsvergrößernden Bewegungsrichtung auf einem Maximalabstand zwischen Schaltschrank und Fertigungseinheit begrenzen.

Was die Lagerung des Schaltschranks betrifft, so könnte vorzugsweise konkret die Unterseite des Schaltschranks unmittelbar an der Fertigungseinheit gelagert sein. Insbesondere, indem die Unterseite bereichsweise auf sich von der Fertigungseinheit in Richtung des Schaltschranks erstreckenden Tragplatten der Fertigungseinheit aufliegt.

Dabei können diese Tragplatten Führungsausnehmungen oder Führungsschienen aufweisen, in denen dazu passende Führungselemente des Schaltschranks während der Bewegung des Schaltschranks geführt sind.

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen.

Darin zeigt:
- Fig. 1: eine schematische Schrägansicht einer ersten Ausführungsform einer erfindungsgemäßen, modulartigen Verpackungsmaschine, nämlich eine Verpackungsmaschine zur Herstellung von Hinge-Lid-Packungen,

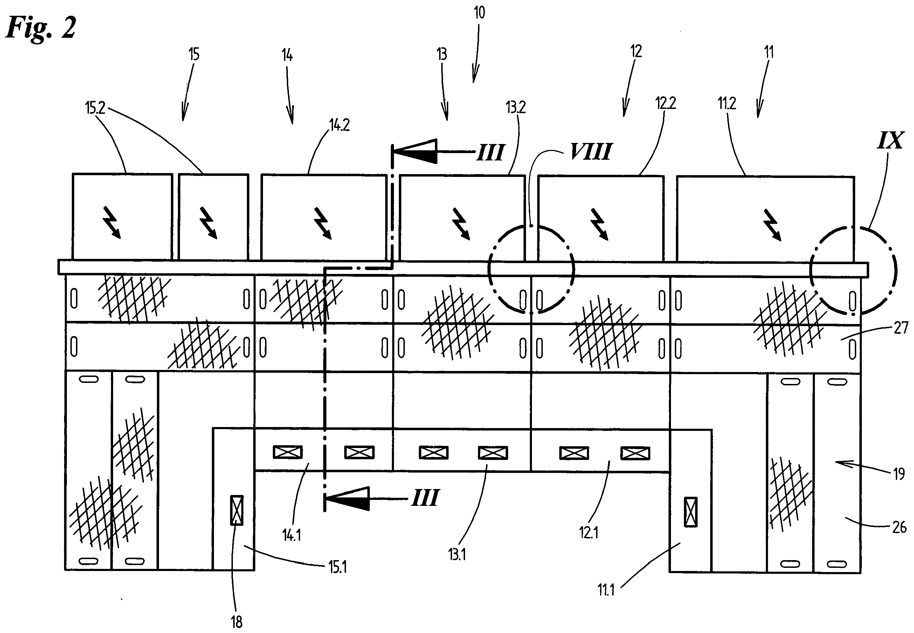

- Fig. 2: eine Ansicht der modularen Verpackungsmaschine mit Blickrichtung entlang des Pfeils II aus Fig. 1 (Draufsicht),
- Fig. 3: eine Schnittansicht der modularen Verpackungsmaschine entlang der Schnittlinie III - III aus Fig. 2,
- Fig. 4: die Darstellung der modularen Verpackungsmaschine entsprechend Fig. 3 in einer Transportstellung, nämlich mit einem an eine Fertigungseinheit eines Fertigungsmoduls heran bewegten Schaltschrank des Fertigungsmoduls,
- Fig. 5: die Einzelheit V gemäß Fig. 4 in vergrößerter Darstellung,
- Fig. 6: eine Schnittansicht der modularen Verpackungsmaschine entlang der Schnittlinie VI - VI aus Fig. 5,

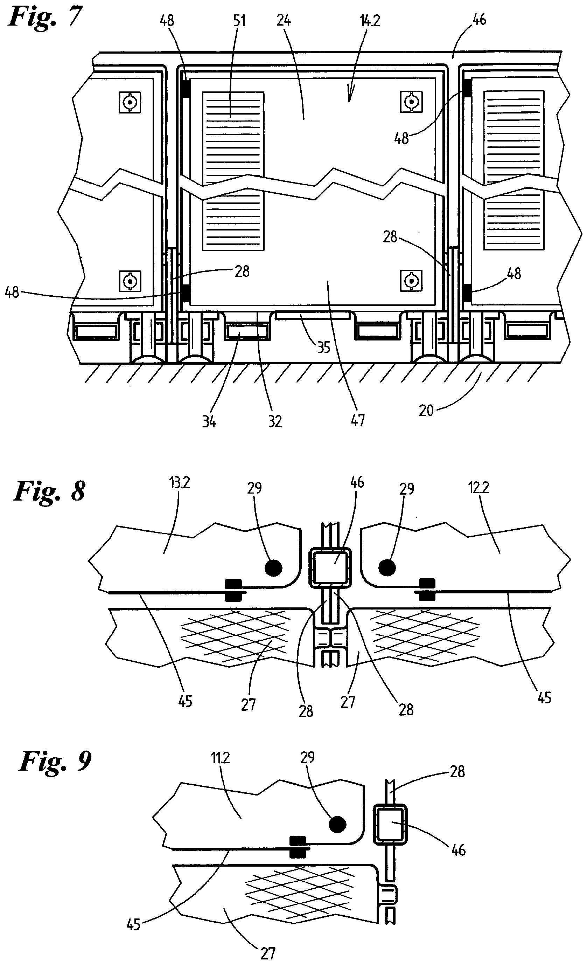

- Fig. 7: eine Ansicht der modularen Verpackungsmaschine mit Blickrichtung entlang des Pfeils VII in Fig. 3,
- Fig. 8: die Einzelheit VIII gemäß Fig. 2 in vergrößerter Darstellung,
- Fig. 9: die Einzelheit IX gemäß Fig. 2 in vergrößerter Darstellung.
- Fig. 10: die Darstellung entsprechend Fig. 3 einer alternativen Ausführungsform der modularen Verpackungsmaschine, ebenfalls in einer Transportstellung.

In den Zeichnungen ist eine Ausführungsform einer modulartigen Verpackungsmaschine 10 zur Verpackung von Zigaretten oder von Zigarettenpackungen mit in diesem Beispiel fünf Fertigungsmodulen 11 - 15 gezeigt. Nämlich eine Verpackungsmaschine zur Herstellung von sogenannten Hinge-Lid-Packungen. Erfindungsgemäß kommt es nicht darauf an, welche Art von Packungen hergestellt wird. Die Erfindung kann beispielsweise auch bei modular aufgebauten Maschinen zur Verpackung von einzelnen Zigarettenpackungen in Folienzuschnitte - Cello - verwendet werden, bei Maschinen zur Verpackung von Gruppen von Zigarettenpackungen in Gebindepackungen - Gebindepacker -, bei Kartonpackern oder dergleichen.

Bei der nachfolgenden Beschreibung der Verpackungsmaschine 10 kommt es daher auch nicht entscheidend darauf an, welche Fertigungsschritte in welchem der Module 11-15 durchgeführt werden.

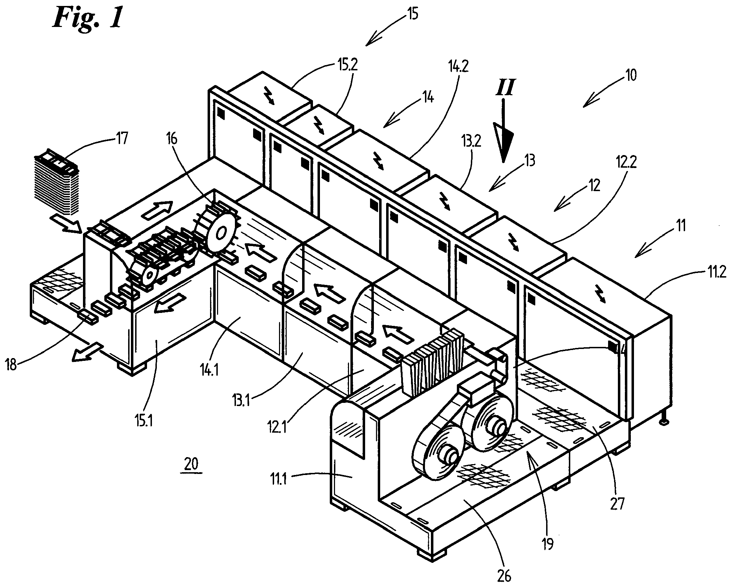

Das im Fertigungsfluss (die Richtung desselben ist durch die drei in U-Form angeordneten Pfeile in Fig. 1 angedeutet) erste Modul 11 kann beispielsweise ein Formierungsmodul sein zum Formieren bzw. Gruppieren von einzelnen, aus einem in Fig. 1 nicht gezeigten Zigarettenmagazin entstammenden Zigaretten zu jeweils einer mehrlagigen, in der Regel dreilagigen Zigarettengruppe.

Nach Formierung der Zigarettengruppen können diese dem im Fertigungsfluss stromab nächstfolgenden bzw. benachbart angeordneten Fertigungsmodul 12 zugefördert werden. In dem Fertigungsmodul 12 werden dann bestimmte weitere Schritte zur Fertigung der Hinge-Lid-Packung durchgeführt. Von dem Fertigungsmodul 12 wird die Zigarettengruppe dann an das nächstfolgende Modul 13 und von dort an das nächstfolgende Modul 14 übergeben. In den Modulen 12-14 werden geeignete Fertigungsschritte durchgeführt, wie etwa das Einhüllen der Zigarettengruppe in einen Innenzuschnitt, wie etwa einen Stanniolzuschnitt, oder - bei einer Dichtpackung - das Einhüllen in eine Dichtfolie.

Das im Fertigungsfluss letzte Modul 15 ist im vorliegenden Ausführungsbeispiel ein Außenzuschnittmodul. In diesem wird zunächst ein sogenannter Kragen 16 auf die eingehüllte Zigarettengruppe aufgelegt und diese zusammen mit dem Kragen 16 in einen Außenzuschnitt 17 aus Karton verpackt. Der Außenzuschnitt 17 bildet die Außenverpackung der fertigen, mit der Bezugsziffer 18 versehenen Zigarettenpackung, die das Außenzuschnittmodul 15 verlässt.

Jedes Fertigungsmodul 11 - 15 verfügt jeweils über eine eigene Fertigungseinheit 11.1 - 15.1, in der bzw. durch die die geschilderten Fertigungsschritte mittels geeigneter Fertigungsmittel der jeweiligen Fertigungseinheit 11.1 - 15.1 ausgeführt werden. Die Fertigungsmittel der jeweiligen Fertigungseinheit 11.1 - 15.1 können unter anderem jeweils ein oder mehrere der im Stand der Technik für die Durchführung dieser Fertigungsschritte bekannten Bearbeitungsorgane umfassen, und/oder ein oder mehrere Förderorgane, und/oder ein oder mehrere Prüforgane oder dergleichen.

Daneben weist jedes Fertigungsmodul 11 - 15 jeweils mindestens einen eigenen Schaltschrank 11.2 - 15.2 auf. Wie in Fig. 1 zu erkennen ist, verfügt dabei das Außenzuschnittmodul 15 sogar über zwei Schaltschränke 15.2, während die anderen Module 11-14 jeweils nur einen Schaltschrank 11.2-14.2 aufweisen.

In den Schaltschränken 11.2 - 15.2 ist jeweils die für den Betrieb der jeweiligen Fertigungseinheit 11.1 - 15.1 des jeweiligen Fertigungsmoduls 11 - 15 erforderliche Elektrik/Elektronik enthalten. Diese kann jeweils ein oder mehrere Steuereinheiten für die Fertigungsmittel einschließen.

Dabei verlaufen entsprechende Stromversorgungs- und/oder Steuerungsleitungen 31 bzw. -kabel im Sinne einer 1:1 Zuordnung bevorzugt nur jeweils zwischen der jeweiligen Fertigungseinheit 11.1 - 15.1 und dem mindestens einen, der Fertigungseinheit 11.1 - 15.1 jeweils zugeordneten Schaltschrank 11.2 - 15.2 ein und desselben Fertigungsmoduls 11 - 15. Es verlaufen demnach in der Regel keine derartigen Leitungen bzw. Kabel 31 zwischen dem Schaltschrank 11.2 - 15.2 eines ersten Fertigungsmoduls 11 - 15 und der Fertigungseinheit 11.1 - 15.1 eines anderen, zweiten Fertigungsmoduls 11 - 15. Mit anderen Worten verlaufen diese nur jeweils zwischen der Fertigungseinheit 11.1 und dem zugeordneten Schaltschrank 11.2, zwischen der Fertigungseinheit 12.1 und dem Schaltschrank 12.2, zwischen der Fertigungseinheit 13.1 und dem Schaltschrank 13.2, zwischen der Fertigungseinheit 14.1 und dem Schaltschrank 14.2 sowie zwischen der Fertigungseinheit 15.1 und den beiden Schaltschränken 15.2.

Diese eindeutige Zuordnung ermöglicht es, bei Bedarf jeweils einzelne, komplette Fertigungsmodule 11 - 15 von den restlichen Modulen 11 - 15 der Verpackungsmaschine 10 zu separieren und beispielsweise auszutauschen, also inklusive Fertigungseinheit 11.1 - 15.1 und Schaltschrank bzw. Schaltschränken 11.2 - 15.2.

Vorteilhafterweise können grundsätzlich zwischen dem jeweiligen Schaltschrank 11.2 - 15.2 und der zugeordneten Fertigungseinheit 11.1 - 15.1 und/oder zwischen dem Schaltschrank 11.2 - 15.2 und einer übergeordneten Maschinensteuerung Stromversorgungsleitungen 31 und/oder Steuerungsleitungen 31 verlaufen, die die elektrischen/elektronischen Bauteile des Schaltschranks 11.2 - 15.2 mit der Fertigungseinheit 11.1 - 15.1 und/oder mit der übergeordneten Maschinensteuerung verbinden und die jeweils im Bereich des Schaltschranks 11.2 - 15.2 und/oder im Bereich der Fertigungseinheit 11.1 - 15.1 und/oder im Bereich der Maschinensteuerung jeweils zwei lösbar miteinander verbundene Verbindungsmittel aufweisen. Hierdurch ist es beispielsweise möglich, die durch die Leitungen 31 gebildete "Verdrahtung" zwischen diesen Baugruppen bei Bedarf in einfacher Weise zu lösen und beispielsweise ggf. nur die Fertigungseinheit 11.1 - 15.1 oder nur den Schaltschrank 11.2 - 15.2 eines Fertigungsmoduls 11 - 15 zu tauschen.

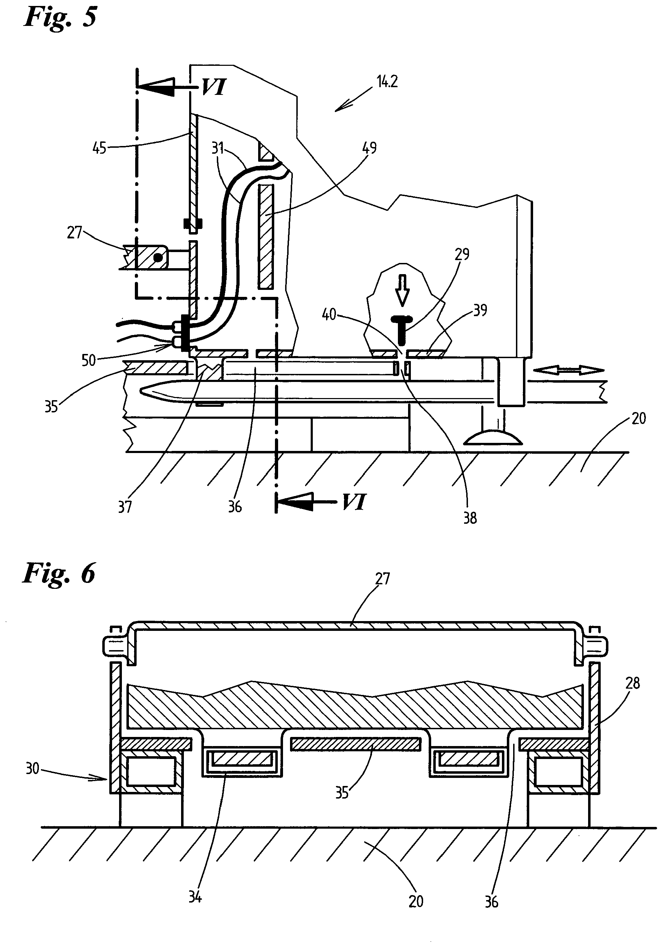

Im vorliegenden Ausführungsbeispiel weisen konkret die die Schaltschränke 11.2 - 15.2 und die Fertigungseinheiten 11.1 - 15.1 verbindenden Strom- und Steuerungsleitungen 31 derartige Steckverbindungen 50, vgl. Fig. 5. Diese Steckverbindungen 50 sind dabei im Bereich des jeweiligen Schaltschranks 11.2 - 15.2 angeordnet, nämlich der Rückseite 21 desselben zugeordnet.

Jeweils benachbarte Fertigungsmodule 11 - 15 grenzen vorliegend unmittelbar aneinander an, insbesondere lückenlos. Sie können insbesondere untereinander trennbar verbunden sein, beispielsweise mit Schraub- und/oder Klemmverbindungen, die sich leicht lösen lassen, um ein Separieren der Fertigungsmodule 11 - 15 bzw. insbesondere einen Austausch derselben zu ermöglichen. Dies muss aber nicht so sein. Wie gezeigt ist, sind die Fertigungseinheiten 11.1 - 15.1 der Fertigungsmodule 11 - 15 U-förmig angeordnet, so dass sich ein (durch die drei Pfeile gekennzeichneter) U-förmiger Fertigungsfluss ergibt. Dies muss aber ebenfalls nicht so sein. Die sechs Schaltschränke 11.2 - 15.2 dagegen sind in einer geraden Reihe aufgestellt. Jeder Schaltschrank 11.2 - 15.2 bzw. mindestens eine Seite desselben ist dabei der ihm zugeordneten Fertigungseinheit 11.1 - 15.1 desselben Fertigungsmoduls 11 - 15 jeweils direkt gegenüber angeordnet.

Die Reihe aus Schaltschränken 11.2 - 15.2 ist dabei mit Abstand zu den Fertigungseinheiten 11.1 - 15.1 positioniert. Der Abstand ist so gewählt, dass ein Werker zwischen der Reihe aus Schaltschränken 11.2 - 15.2 und den Fertigungseinheiten 11.1 - 15.1 hindurchgehen kann. Innerhalb des sich durch den Abstand ergebenen Raumes ist zwischen den Schaltschränken 11.2 - 15.2 einerseits und den Fertigungseinheiten 11.1 - 15.1 andererseits auf diese Weise ein Laufweg 19 geschaffen.

Der Laufweg 19 ist vorliegend gegenüber dem Niveau des Bodens 20, auf dem die Fertigungseinheiten 11.1 - 15.1 sowie die Schaltschränke 11.2 - 15.2 stehen, erhöht. Der Laufweg 19 ermöglicht es einem Werker, in einfacher Weise an die an den Laufweg 19 angrenzenden Rückseiten 21 der Schaltschränke 11.2 - 15.2 - und an die Rückseiten 22 der Fertigungseinheiten 11.1 - 15.1 zu gelangen. Vorliegend grenzen die Rückseiten 22 der Fertigungseinheiten 11.1 - 15.1 sowie die Rückseiten der Schaltschränke 11.2 - 15.2 entsprechend an den Laufweg 19 an bzw. sind diesem zugewandt. Auf den jeweils anderen bzw. gegenüberliegenden Seiten verfügen die Fertigungseinheiten 11.1 - 15.1 über entsprechende Vorder- bzw. Bedienseiten 23 sowie die Schaltschränke 11.2 - 15.2 über entsprechende Vorderseiten 24.

Jede Fertigungseinheit 11.1 - 15.1 weist ein Gehäuse 25 zur Aufnahme sämtlicher oder mindestens eines Teils der Fertigungsmittel der entsprechenden Fertigungseinheit 11.1 - 15.1. Wie in Fig. 1 gezeigt ist, erstreckt sich der Laufweg 19 im Ergebnis in U-form auch um die Rückseiten 22 der Fertigungseinheiten 11.1 - 15.1 bzw. dieser Gehäuse 25.

Der U-förmige Laufweg 19 wird gebildet durch erhöhte Plattformen 26, die jeweils den Fertigungseinheiten 11.1 - 15.1 zugeordnet bzw. vorliegend Bestandteil derselben sind.

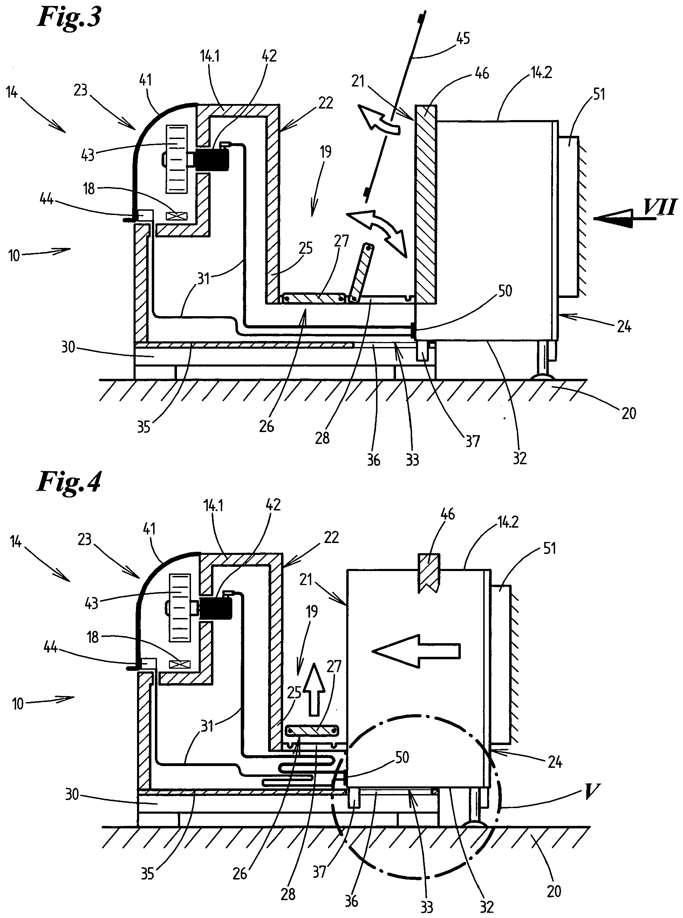

Vorliegend grenzen die Schaltschränke 11.2 - 15.2 (die Rückseite 21) - insbesondere kontaktierend - unmittelbar an jeweils mindestens eine Plattform 26 an. Wie am Beispiel des Fertigungsmoduls 14 in den Fig. 3 und 4 gezeigt ist, verfügt jede Plattform 26 über Bodenplatten 27, die mit von dem Niveau des Bodens 20 beabstandeten Tragelementen bzw. Tragarme 28 der jeweiligen Fertigungseinheit 11.1 - 15.1 lösbar verbunden sind. Vorliegend sind sie jeweils auf zwei horizontal voneinander beabstandete Tragelemente 28 aufgelegt. Die Tragelemente 28 erstrecken sich ausgehend von der jeweiligen Fertigungseinheit 11.1 - 15.1 in Richtung des zugeordneten Schaltschranks 11.2 - 15.2.

Die Tragelemente 28 sind sie mit einem vorliegend rahmenartigen, auf dem Boden 20 stehenden Grundgestell 30 der jeweiligen Fertigungseinheit 11.1 - 15.1 verbunden, insbesondere sind sie Bestandteil desselben.

Die oben bereits erwähnten Steuerungs- und Stromversorgungskabel 31, die zwischen den Fertigungseinheiten 11.1 - 15.1 einerseits und den jeweils zugeordneten Schaltschränken 11.2 - 15.2 anderseits verlaufen, sind unterhalb der Plattformen 26 bzw. unterhalb der Bodenplatten 27 geführt, so dass diese vorteilhafterweise nicht sichtbar sind. Im Bereich der jeweiligen Fertigungseinheit 11.1 - 15.1 verlaufen sie innerhalb des Gehäuses 25. Das Gehäuse 25 wird dabei letztlich durch entsprechende, an dem Grundgestell 30 befestigte Verkleidungsbleche oder Verkleidungsplatten gebildet.

Die Fertigungsmodule 11- 15 sind von einer Fertigungsstellung (bspw. Fig. 3), in der die Verpackungsmaschine 10 die Packungen 18 fertigt, in eine Transportstellung überführbar (vgl. Fig. 4), in der einzelne Module 11 - 15 aus der Verpackungsmaschine 10 bei Bedarf entfernbar sind bzw. in der die Module 11 - 15 besonders gut transportiert werden können.

Zur Überführung des Fertigungsmoduls 11 - 15 in die Transportstellung wird zum einen die erhöhte Plattform 26 vollständig oder teilweise entfernt. Hierfür werden die lösbar auf die Tragelementen 28 aufgelegten Bodenplatten 27 von den Tragelementen 28 abgehoben (Fig. 3). Anschließend kann dann der jeweilige Schaltschrank 11.2 - 15.2 in Richtung der jeweils zugeordneten Fertigungseinheit 11.1 - 15.1 verfahren werden.

Zum anderen werden die Schaltschränke 11.2 - 15.2 an die jeweils zugeordnete Fertigungseinheit 11.1 - 15.1 heran bewegt, um den Abstand zwischen den Fertigungseinheiten 11.1 - 15.1 und den Schaltschränken 11.2 - 15.2 verringern und so die Abmessungen der Module 11 - 15 auf für einen Transport geeignetere Maße reduzieren zu können (Fig.4).

Dabei werden die Schaltschränke 11.2 - 15.2 jeweils zwischen den beiden voneinander beabstandeten Tragarmen 28 der jeweiligen Fertigungseinheiten 11.1 - 15.1 in Richtung der zugeordneten Fertigungseinheit 11.1 - 15.1 verfahren bzw. bewegt. Der Abstand der jeweiligen beiden Tragarme 28 ist entsprechend (etwas) größer gewählt als die Breite des jeweils zugeordneten Schaltschranks 11.2 - 15.2.

Die Schaltschränke 11.2 - 15.2 sind bevorzugt an der jeweils zugeordneten Fertigungseinheit 11.1 - 15.1 bewegbar gelagert. Theoretisch könnte der gesamte Schaltschrank 11.2 - 15.2 allerdings beispielsweise auch auf Rollen gelagert sein, sodass eine Lagerung an der Fertigungseinheit 11.2 - 15.2 in diesem Fall entbehrlich wäre.

Konkret liegt im vorliegenden Beispiel die Unterseite 32 des jeweiligen Schaltschranks 11.2 - 15.2 im vorderen Bereich bzw. im der Fertigungseinheit 11.1 - 15.1 zugewandten Bereich unmittelbar auf einer Lagerebene 33 der Fertigungseinheit 11.2 - 15.2 auf. Dies muss aber nicht so sein. Die Lagerung könnte beispielsweise auch seitlich oder oben erfolgen.

Entlang der (horizontalen) Lagerebene 33 kann der jeweilige Schaltschrank 11.2 - 15.2 verfahren werden. Beispielsweise mittels eines Hubwagens, dessen Transportarme in dafür vorgesehene, an der Unterseite 32 des Schaltschranks 11.2 - 15.2 angeordnete Transportaufnahmen 34 eingreifen.

Die Schaltschränke 11.2 - 15.2 verfügen an ihrer jeweiligen Rückseite 21 jeweils über eine sich mindestens auf Höhe der Tragelemente 28 erstreckende, durch eine Schaltschrankabdeckung 45 überdeckte Schaltschranköffnung. Die Schaltschrankabdeckung 45 ist lösbar ausgebildet, sodass der jeweilige Schaltschrank 11.2 - 15.2 auch von der Rückseite 21 zugänglich ist.

Die Lagerebene 33 wird im vorliegenden Ausführungsbeispiel durch (horizontale) Lager- bzw. Tragplatten 35 gebildet, die mit dem Grundgestell 30 verbunden sind, insbesondere Bestandteil desselben sind.

Die Tragplatten 35 weisen längliche Führungsausnehmungen 36 auf. In jeder Führungsaufnahme 36 ist ein passendes Führungsteil 37 des jeweiligen Schaltschranks 11.2 - 15.2 angeordnet, vorliegend ein an der Unterseite 32 angeordneter Vorsprung oder Nocken.

Die Führungsausnehmungen 36 der Tragplatten 35 der Fertigungseinheiten 11.1 - 15.1 und die dazu passenden Führungsteile 37 der Schaltschränke 11.2 - 15.2 wirken derart zusammen, dass der jeweilige Schaltschrank 11.2 - 15.2 während seiner Bewegung relativ zu der Fertigungseinheit 11.1 - 15.1 seitlich geführt ist. Entsprechend werden Bewegungen in der Richtung quer zu der abstandsverringernden Bewegungsrichtung des Schaltschranks 11.2 - 15.2 begrenzt.

Die Führungsausnehmungen 36 bzw. die diese begrenzenden Wandungen dienen zudem auch als Begrenzermittel zur Begrenzung der Bewegung des Schaltschranks 11.2 - 15.2 in der abstandsvergrößernden Bewegungsrichtung auf einen Maximalabstand zwischen Schaltschrank 11.2 - 15.2 und zugeordneter Fertigungseinheit 11.1 - 15.1. Denn die Führungsteile 37 schlagen an die entsprechende hintere Wandung der Führungsausnehmung 36 an, sobald ein Maximalabstand zwischen Schaltschrank 11.2 - 15.2 und Fertigungseinheit 11.1 - 15.1 erreicht ist.

In den Tragplatten 35 sind zudem Bohrungen 38 angeordnet, in die Bolzen oder Schrauben 29 eingeführt werden können. Diese dienen zur Fixierung der Schaltschränke 11.2 - 15.2 in der Fertigungsstellung. Zu diesem Zweck fluchten in der Fertigungsstellung entsprechende Bohrungen 40 in dem Schrankboden 39 mit den Bohrungen 38 in der jeweiligen Tragplatte 35. Die Schrauben/Bolzen 29 durchgreifen zur Fixierung dann die fluchtenden Bohrungen 38 und 40. Wenn die Schaltschränke 11.2 - 15.2 in die Transportstellung überführt werden sollen, werden die Schrauben/Bolzen 29 entsprechend gelöst.

An der Bedienseite 23 der Fertigungseinheiten 11.1 - 15.1 sind des Weiteren jeweils Schutzhauben 41 angeordnet, die die Fertigungsmittel überdecken. In den Fig. 3 und 4 sind als Fertigungsmittel beispielhaft ein von einem Antriebsmotor 42 angetriebenes Fertigungsorgan 43 gezeigt sowie ein Sensor 44.

Die Schaltschränke 11.2 - 15.2 werden des Weiteren von einem (ortsfesten) Rahmen 46 eingefasst, der - wie die Bodenplatten 27 - an den Tragelementen 28 des Gestells 39 befestigt ist bzw. sich auf diesen abstützt.

Die Vorderseiten 24 der Schaltschränke 11.2 - 15.2, also die von dem Laufweg 19 bzw. den Plattformen 26 abgewandten, den Rückseiten 21 gegenüberliegenden Seiten, verfügen jeweils über eine (vorliegend über Scharniere 48 schwenkbar angelenkte) öffenbare Schaltschranktür 47. Im Inneren der Schaltschränke 11.2 - 15.2 ist jeweils eine Montageplatte 49 angeordnet, an der die elektrischen/elektronischen Komponenten befestigt sind.

Schließlich ist den Schaltschränken 11.2 - 15.2 noch jeweils ein individuell abgestimmtes Klimagerät 51 zugeordnet.

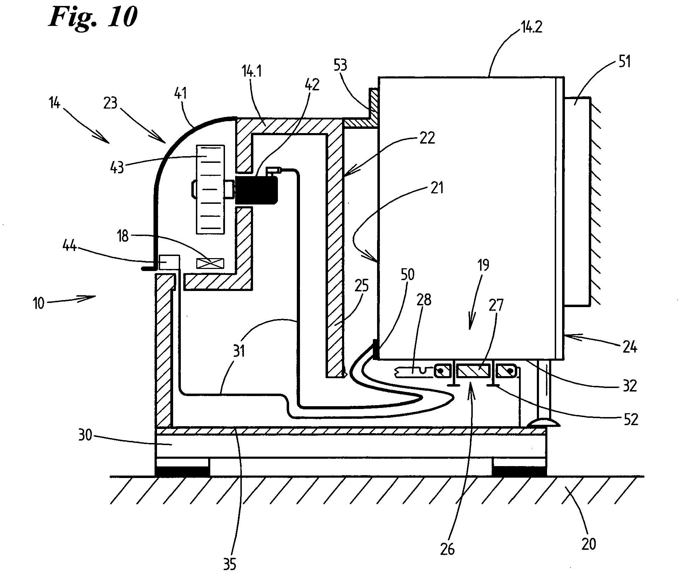

Eine Alternative zu der in Fig. 4 gezeigten Transportstellung der Fertigungsmodule 11 - 15 ist in Fig. 10 dargestellt. Es kann zur Überführung der Fertigungsmodule 11 - 15 in die Transportstellung vorgesehen sein, wiederum zunächst ein oder mehrere Bodenplatten 27 von den Tragelementen 28 abzuheben bzw. zu lösen. Anschließend würde mindestens eine Bodenplatte 27 an der Unterseite des jeweiligen Schaltschranks 11.2 - 15.2 lösbar befestigt werden, beispielsweise durch Verschraubung 52. Der jeweilige Schaltschrank 11.2 - 15.2 würde aber - anders als in Fig. 4 - nicht in Richtung der zugeordneten Fertigungseinheit 11.1 - 15.1 verfahren werden. Um den Abstand zwischen Schaltschrank 11.2 - 15.2 und zugeordneter Fertigungseinheit 11.1 - 15.1 und entsprechend die Abmessungen der Module 11 - 15 für den Transport zu verringern, würde vielmehr der jeweilige Schaltschrank 11.2 - 15.2 zusammen mit der an ihm befestigten Bodenplatte 27 insbesondere durch Anheben des Schaltschranks 11.2 - 15.2 so in Richtung der Fertigungseinheit 11.1 - 15.1 bewegt/gehoben werden bzw. so positioniert werden, dass sich die jeweilige Bodenplatte 27 wieder in ihrer ursprünglichen (Fertigungs-)Position relativ zu den ihr zugeordneten Tragelementen 28 befindet. Im vorliegenden Beispiel würde die jeweilige Bodenplatte 27 entsprechend wieder in die ihr zugeordnete, durch die Tragelemente 28 gebildete Bodenplattenaufnahme verbracht werden, vgl. Fig. 10.

Zusätzlich kann noch eine lösbare Transportsicherung 53 vorgesehen sein - hier ein Winkel - die das Gehäuse 25 der Fertigungseinheit 11.1 - 15.1 mit dem Gehäuse des Schaltschranks 11.2 - 15.2 verbindet.

**Bezugszeichenliste:**

| | | | |
|---|---|---|---|
| 10 | Verpackungsmaschine | 26 | erhöhe Plattform |
| 11 | Formierungsmodul | 27 | Bodenplatten |
| 11.1 | Fertigungseinheit | 28 | Tragelemente |
| 11.2 | Schaltschrank | 29 | Bolzen |
| 12 | Fertigungsmodul | 30 | Grundgestell |
| 12.1 | Fertigungseinheit | 31 | Leitungen |
| 12.2 | Schaltschrank | 32 | Unterseite |
| 13 | Fertigungsmodul | 33 | Lagerebene |
| 13.1 | Fertigungseinheit | 34 | Transportaufnahme |
| 13.2 | Schaltschrank | 35 | Tragplatten |
| 14 | Fertigungsmodul | 36 | Führungsausnehmungen |
| 14.1 | Fertigungseinheit | 37 | Führungsteil |
| 14.2 | Schaltschrank | 38 | Bohrung |
| 15 | Außenzuschnittmodul | 39 | Schrankboden |
| 15.1 | Fertigungseinheit | 40 | Bohrung |
| 15.2. | Schaltschrank | 41 | Schutzhauben |
| 16 | Kragen | 42 | Antriebsmotor |
| 17 | Außenzuschnitt | 43 | Fertigungsorgan |
| 18 | Zigarettenpackung | 44 | Sensor |
| 19 | Laufweg | 45 | Schaltschrankabdeckung |
| 20 | Boden | 46 | Schaltschrankrahmen |
| 21 | Schaltschrankrückseite | 47 | Schaltschranktür |
| 22 | Rückseite Fertigungseinheit | 48 | Scharniere |
| 23 | Bedienseite Fertigungseinheit | 49 | Montageplatte |
| 24 | Schaltschrankvorderseite | 50 | Steckverbindung |
| 25 | Gehäuse | 51 | Klimagerät |
| 52 | Verschraubung | | |
| 53 | Transportsicherung | | |

## Patentansprüche

1. Modulare Vorrichtung zum Verpacken von Zigaretten oder Zigarettenpackungen mit mehreren Fertigungsmodulen (11 - 15), die jeweils eine Fertigungseinheit (11.1 - 15.1) zur Durchführung mindestens eines Fertigungsschrittes aufweisen, wobei mindestens ein Fertigungsmodul (11 - 15), bevorzugt mehrere Fertigungsmodule (11 - 15), über einen der Fertigungseinheit (11.1 - 15.1) zugeordneten, von dieser beabstandeten Schaltschrank (11.2 - 15.2) verfügt, der elektronische oder elektrische Bauteile zum Betrieb der Fertigungseinheit (11.1 - 15.1) aufweist, und wobei zwischen der Fertigungseinheit (11.1 - 15.1) und dem diesem jeweils zugeordneten Schaltschrank (11.2 - 15.2) des Fertigungsmoduls (11 - 15), eine gegenüber dem Niveau des Bodens (20), auf dem die Fertigungseinheit (11.1 - 15.1) steht, erhöhte, einen begehbaren Laufweg (19) für einen Werker bildende Plattform (26) angeordnet ist, **dadurch gekennzeichnet, dass** die erhöhte Plattform (26) gebildet ist durch eine oder mehrere, auf mindestens zwei Tragarmen (28) der Fertigungseinheit (11.1 - 15.1) bzw. auf mindestens zwei mit dieser verbundenen Tragarmen (28) aufliegenden Plattenelemente, wobei in einer Transportstellung die Unterseite des Schaltschranks (11.2 - 15.2) wenigstens bereichsweise auf mindestens einem auf den mindestens zwei Tragarmen (28) aufliegenden Plattenelement aufliegt und mit diesem lösbar verbunden ist.

2. Modulare Vorrichtung gemäß Anspruch 1, **dadurch gekennzeichnet, dass** die Fertigungseinheit (11.1 - 15.1) über eine Bedienseite (23) und eine Rückseite (22) verfügt, wobei die erhöhte Plattform (26) zwischen der Rückseite (22) der Fertigungseinheit (11.1 - 15.1) und dem Schaltschrank (11.2 - 15.2) angeordnet ist.

3. Modulare Vorrichtung gemäß Anspruch 1 oder 2, **dadurch gekennzeichnet, dass** sich die erhöhte Plattform (26) in einer Fertigungsstellung lückenlos oder im Wesentlichen lückenlos zwischen der Fertigungseinheit (11.1 - 15.1) und dem Schaltschrank (11.2 - 15.2) befindet, insbesondere lückenlos oder im Wesentlichen lückenlos an die Fertigungseinheit (11.1 - 15.1) einerseits und den Schaltschrank (11.2 - 15.2) andererseits angrenzt.

4. Modulare Vorrichtung gemäß Anspruch 1, **dadurch gekennzeichnet, dass** die Tragarme (28) mit einem Grundgestell (30) der Fertigungseinheit (11.1 - 15.1) verbunden sind oder Bestandteil desselben sind.

5. Modulare Vorrichtung gemäß Anspruch 4, **dadurch gekennzeichnet, dass** das Grundgestell (30) Bestandteil eines Gehäuses (25) der Fertigungseinheit (11.1 - 15.1) ist, durch das Abschnitte von zwischen dem Schaltschrank (11.2 - 15.2) und der Fertigungseinheit (11.1 - 15.1) verlaufenden Stromversorgungsleitungen (31) und/oder von Steuerungsleitungen (31) geführt sind.

6. Modulare Vorrichtung gemäß einem oder mehreren der vorhergehenden Ansprüche, **dadurch gekennzeichnet, dass** der Schaltschrank (11.2 - 15.2) derart bewegbar gelagert ist, insbesondere an der Fertigungseinheit (11.1 - 15.1), dass der Abstand zwischen Schaltschrank (11.2 - 15.2) und Fertigungseinheit (11.1 - 15.1) durch Relativbewegung zwischen diesen beiden veränderbar, insbesondere verringerbar ist, bevorzugt durch Bewegung des Schaltschranks (11.2 - 15.2) in Richtung der ortsfesten Fertigungseinheit (11.1 - 15.1).

7. Modulare Vorrichtung gemäß einem oder mehreren der vorhergehenden Ansprüche, **dadurch gekennzeichnet, dass** die Unterseite (32) des Schaltschranks (11.2 - 15.2) an der Fertigungseinheit (11.1 - 15.1) gelagert ist, insbesondere, indem die Unterseite (32) bereichsweise auf sich von der Fertigungseinheit (11.1 - 15.1) in Richtung des Schaltschranks (11.2 - 15.2) erstreckenden Tragplatten (35) der Fertigungseinheit (11.1 -15.1) aufliegt.

8. Modulare Vorrichtung gemäß einem oder mehreren der vorhergehenden Ansprüche, **dadurch gekennzeichnet, dass** unterhalb der Plattform (26) von dem Schaltschrank (11.2 - 15.2) zu der Fertigungseinheit (11.1 - 15.1) verlaufende Stromversorgungsleitungen (31) und/oder Steuerungsleitungen (31) geführt sind.

9. Modulare Vorrichtung gemäß einem oder mehreren der vorhergehenden Ansprüche, **dadurch gekennzeichnet, dass** von dem Schaltschrank (11.2 - 15.2) ausschließlich Stromversorgungsleitungen (31) und/oder Steuerungsleitungen (31) zu der zugeordneten Fertigungseinheit (11.1 - 15.1) verlaufen, nicht aber Leitungen (31) zu anderen Fertigungseinheiten (11.1 - 15.1) der Vorrichtung (10).

10. Modulare Vorrichtung gemäß einem oder mehreren der vorhergehenden Ansprüche, **dadurch gekennzeichnet, dass** zwischen dem Schaltschrank (11.2 - 15.2) und der Fertigungseinheit (11.1 - 15.1) und/oder zwischen dem Schaltschrank (11.2 - 15.2) und einer übergeordneten Maschinensteuerung Stromversorgungsleitungen (31) und/oder Steuerungsleitungen (31) verlaufen, die die elektrischen/elektronischen Bauteile des Schaltschranks (11.2 - 15.2) mit der Fertigungseinheit (11.1 - 15.1) und/oder mit der übergeordneten Maschinensteuerung verbinden, insbesondere mit elektrischen/elektronischen Bauteilen der Fertigungseinheit (11.1 - 15.1) und/oder der Maschinensteuerung, und dass die Leitungen (31) jeweils im Bereich des Schaltschranks (11.2 - 15.2) und/oder im Bereich der Fertigungseinheit (11.1 - 15.1) und/oder im Bereich der Maschinensteuerung zwei lösbar miteinander verbundene Verbindungsmittel aufweisen, insbesondere zwei Verbindungsteile einer Steckverbindung (50).

11. Modulare Vorrichtung gemäß Anspruch 10, **dadurch gekennzeichnet, dass** der Schaltschrank (11.2 - 15.2) in der Transportstellung an der Fertigungseinheit (11.1 - 15.1) lösbar befestigt ist, insbesondere an einem oder dem Gehäuse (25) der Fertigungseinheit (11.1 - 15.1).

12. Fertigungsmodul für eine modulare Vorrichtung gemäß einem oder mehreren der vorhergehenden Ansprüche, mit einer Fertigungseinheit (11.1 - 15.1) zur Durchführung mindestens eines Fertigungsschrittes, sowie einem von dieser beabstandeten Schaltschrank (11.2 - 15.2), der elektronische oder elektrische Bauteile zum Betrieb der Fertigungseinheit (11.1 - 15.1) aufweist, wobei zwischen der Fertigungseinheit (11.1 - 15.1) und dem diesem jeweils zugeordneten Schaltschrank (11.2 - 15.2) des Fertigungsmoduls (11 - 15), eine gegenüber dem Niveau des Bodens (20), auf dem die Fertigungseinheit (11.1 - 15.1) steht, erhöhte, einen begehbaren Laufweg (19) für einen Werker bildende Plattform (26) angeordnet ist, **dadurch gekennzeichnet, dass** die erhöhte Plattform (26) gebildet ist durch eine oder mehrere, auf mindestens zwei Tragarmen (28) der Fertigungseinheit (11.1 - 15.1) bzw. auf mindestens zwei mit dieser verbundenen Tragarmen (28) aufliegende Plattenelemente, und wobei in einer Transportstellung die Unterseite des Schaltschranks (11.2 - 15.2) wenigstens bereichsweise auf mindestens einem auf den mindestens zwei Tragarmen (28) aufliegenden Plattenelement aufliegt und mit diesem lösbar verbunden ist

## Claims

1. Modular device for packaging cigarettes or cigarette packets, having a plurality of manufacturing modules (11 - 15), each having a manufacturing unit (11.1 - 15.1) for carrying out at least one manufacturing step, at least one manufacturing module (11 - 15), preferably a plurality of manufacturing modules (11 - 15), having a switch cabinet (11.2 - 15.2) assigned to the manufacturing unit (11.1 - 15.1) and distanced therefrom, said switch cabinet having electronic or electric components for operating the manufacturing unit (11.1 - 15.1), and a platform (26) that is raised relative to the level of the floor (20) on which the manufacturing unit (11.1 - 15.1) stands and that forms a path (19) over which a worker can walk being arranged between the manufacturing unit (11.1 - 15.1) and the switch cabinet (11.2 - 15.2) of the manufacturing module (11 - 15) assigned to said manufacturing unit, **characterized in that** the raised platform (26) is formed by one or a plurality of plate elements resting on at least two supporting arms (28) of the manufacturing unit (11.1 - 15.1) or on at least two supporting arms (28) connected to the latter, wherein, in a transport position, the underside of the switch cabinet (11.2 - 15.2) rests at least in regions on at least one plate element resting on the at least two support arms (28), and is detachably connected to the latter.

2. Modular device according to Claim 1, **characterized in that** the manufacturing unit (11.1 - 15.1) has an operating side (23) and a rear side (22), the raised platform (26) being arranged between the rear side (22) of the manufacturing unit (11.1 - 15.1) and the switch cabinet (11.2 - 15.2).

3. Modular device according to Claim 1 or 2, **characterized in that,** in a manufacturing position, the raised platform (26) is located without gaps or substantially without gaps between the manufacturing unit (11.1 - 15.1) and the switch cabinet (11.2 - 15.2), and in particular borders the manufacturing unit (11.1 - 15.1) on the one hand and the switch cabinet (11.2 - 15.2) on the other hand without gaps or substantially without gaps.

4. Modular device according to Claim 1, **characterized in that** the supporting arms (28) are connected to a main framework (30) of the manufacturing unit (11.1 - 15.1) or are part thereof.

5. Modular device according to Claim 4, **characterized in that** the main framework (30) is part of a housing (25) of the manufacturing unit (11.1 - 15.1), through which portions of power supply lines (31) and/or of control lines (31) are guided between the switch cabinet (11.2 - 15.2) and the manufacturing unit (11.1 - 15.1).

6. Modular device according to one or more of the preceding claims, **characterized in that** the switch cabinet (11.2 - 15.2) is movably mounted, in particular on the manufacturing unit (11.1 - 15.1), in such a way that the distance between switch cabinet (11.2 - 15.2) and manufacturing unit (11.1 - 15.1) can be changed, in particular can be reduced, by relative movement between these two parts, preferably by moving the switch cabinet (11.2 - 15.2) in the direction of the stationary manufacturing unit (11.1 - 15.1).

7. Modular device according to one or more of the preceding claims, **characterized in that** the underside (32) of the switch cabinet (11.2 - 15.2) is mounted on the manufacturing unit (11.1 - 15.1), in particular **in that** the underside (32) rests in regions on supporting plates (35) of the manufacturing unit (11.1 - 15.1) extending from the manufacturing unit (11.1 - 15.1) in the direction of the switch cabinet (11.2 - 15.2).

8. Modular device according to one or more of the preceding claims, **characterized in that** power supply lines (31) and/or control lines (31) running from the switch cabinet (11.2 - 15.2) to the manufacturing unit (11.1 - 15.1) are guided beneath the platform (26).

9. Modular device according to one or more of the preceding claims, **characterized in that** exclusively power supply lines (31) and/or control lines (31) run from the switch cabinet (11.2 - 15.2) to the assigned manufacturing unit (11.1 - 15.1), but no lines (31) run to other manufacturing units (11.1 - 15.1) of the device (10).

10. Modular device according to one or more of the preceding claims, **characterized in that** power supply lines (31) and/or control lines (31) run between the switch cabinet (11.2 - 15.2) and the manufacturing unit (11.1 - 15.1) and/or between the switch cabinet (11.2 - 15.2) and a superordinate machine controller, and connect the electric/electronic components of the switch cabinet (11.2 - 15.2) to the manufacturing unit (11.1 - 15.1) and/or to the superordinate machine controller, in particular to electric/electronic components of the manufacturing unit (11.1 - 15.1) and/or of the machine controller, and **in that** the lines (31) each have two detachably interconnected connection means, in particular two connection parts of a plug connection (50), in the region of the switch cabinet (11.2 - 15.2) and/or in the region of the manufacturing unit (11.1 - 15.1) and/or in the region of the machine controller.

11. Modular device according to Claim 10, **characterized in that** the switch cabinet (11.2 - 15.2) is detachably connected in the transport position to the manufacturing unit (11.1 - 15.1), in particular to one or the housing (25) of the manufacturing unit (11.1 - 15.1).

12. Manufacturing module for a modular device according to one or more of the preceding claims, having a manufacturing unit (11.1 - 15.1) for carrying out at least one manufacturing step, and also having a switch cabinet (11.2 - 15.2) distanced from said manufacturing unit, said switch cabinet having electronic or electric components for operating the manufacturing unit (11.1 - 15.1), a platform (26) that is raised relative to the level of the floor (20) on which the manufacturing unit (11.1 - 15.1) stands and that forms a path (19) on which a worker can walk being arranged between the manufacturing unit (11.1 - 15.1) and the switch cabinet (11.2 - 15.2) of the manufacturing module (11 - 15) assigned to said manufacturing unit, **characterized in that** the raised platform (26) is formed by one or a plurality of plate elements resting on at least two supporting arms (28) of the manufacturing unit (11.1 - 15.1) or on at least two supporting arms (28) connected to the latter, and wherein, in a transport position, the underside of the switch cabinet (11.2 - 15.2) rests at least in regions on at least one plate element resting on the at least two support arms (28), and is detachably connected to the latter.

## Revendications

1. Dispositif modulaire pour l'emballage de cigarettes ou de paquets de cigarettes avec plusieurs modules de fabrication (11 - 15), qui présentent chacun une unité de fabrication (11.1 - 15.1) pour l'exécution d'au moins une étape de fabrication, dans lequel au moins un module de fabrication (11 - 15), de préférence plusieurs modules de fabrication (11 - 15), dispose d'une armoire de distribution (11.2 - 15.2) associée à une unité de fabrication (11.1 - 15.1) et distante de celle-ci, qui présente des composants électroniques ou électriques pour le fonctionnement de l'unité de fabrication (11.1 - 15.1), et dans lequel une plate-forme (26) surélevée par rapport au niveau du sol (20) sur lequel l'unité de fabrication (11.1 - 15.1) est installée et formant un plancher (19) accessible pour un travailleur est disposée entre l'unité de fabrication (11.1 - 15.1) et l'armoire de distribution (11.2 - 15.2) du module de fabrication (11 - 15) respectivement associée à celle-ci,
**caractérisé en ce que** la plate-forme surélevée (26) est formée par un ou plusieurs élément(s) de plaque reposant sur au moins deux bras de support (28) de l'unité de fabrication (11.1 - 15.1) ou sur au moins deux bras de support (28) assemblés à celle-ci, dans lequel dans une position de transport le côté inférieur de l'armoire de distribution (11.2 - 15.2) repose au moins localement sur au moins un élément de plaque reposant sur lesdits au moins deux bras de support (28) et est assemblé à celui-ci de façon détachable.

2. Dispositif modulaire selon la revendication 1, **caractérisé en ce que** l'unité de fabrication (11.1 - 15.1) présente un côté de commande (23) et un côté arrière (22), dans lequel la plate-forme surélevée (26) est disposée entre le côté arrière (22) de l'unité de fabrication (11.1 - 15.1) et l'armoire de distribution (11.2 - 15.2).

3. Dispositif modulaire selon la revendication 1 ou 2, **caractérisé en ce que** la plate-forme surélevée (26) se trouve dans une position de fabrication sans interruption ou essentiellement sans interruption entre l'unité de fabrication (11.1 - 15.1) et l'armoire de distribution (11.2 - 15.2), en particulier est jointive sans interruption ou essentiellement sans interruption à l'unité de fabrication (11.1 - 15.1) d'une part et à l'armoire de distribution (11.2 - 15.2) d'autre part.

4. Dispositif modulaire selon la revendication 1, **caractérisé en ce que** les bras de support (28) sont assemblés à un bâti de base (30) de l'unité de fabrication (11.1 - 15.1) ou font partie de celui-ci.

5. Dispositif modulaire selon la revendication 4, **caractérisé en ce que** le bâti de base (30) fait partie d'une enceinte (25) de l'unité de fabrication (11.1 - 15.1), à travers laquelle sont conduites des parties de lignes d'alimentation électrique (31) et/ou de lignes de commande (31) installées entre l'armoire de distribution (11.2 - 15.2) et l'unité de fabrication (11.1 - 15.1).

6. Dispositif modulaire selon une ou plusieurs des revendications précédentes, **caractérisé en ce que** l'armoire de distribution (11.2 - 15.2) est montée de façon déplaçable, en particulier sur l'unité de fabrication (11.1 - 15.1), de telle manière que la distance entre l'armoire de distribution (11.2 - 15.2) et l'unité de fabrication (11.1 - 15.1) puisse être modifiée, en particulier puisse être réduite, par un mouvement relatif entre ces deux composants, de préférence par un mouvement de l'armoire de distribution (11.2 - 15.2) en direction de l'unité de fabrication stationnaire (11.1 - 15.1).

7. Dispositif modulaire selon une ou plusieurs des revendications précédentes, **caractérisé en ce que** le côté inférieur (32) de l'armoire de distribution (11.2 - 15.2) est monté sur l'unité de fabrication (11.1 - 15.1), en particulier par le fait que le côté inférieur (32) repose localement sur des plaques de support (35) de l'unité de fabrication (11.1 - 15.1) qui s'étendent à partir de l'unité de fabrication (11.1 - 15.1) en direction de l'armoire de distribution (11.2 - 15.2).

8. Dispositif modulaire selon une ou plusieurs des revendications précédentes, **caractérisé en ce que** des lignes d'alimentation électrique (31) et/ou des lignes de commande (31) menant de l'armoire de distribution (11.2 - 15.2) à l'unité de fabrication (11.1 - 15.1) sont conduites en dessous de la plate-forme (26).

9. Dispositif modulaire selon une ou plusieurs des revendications précédentes, **caractérisé en ce que** de l'armoire de distribution (11.2 - 15.2) partent exclusivement des lignes d'alimentation électrique (31) et/ou des lignes de commande (31) vers l'unité de fabrication associée (11.1 - 15.1), mais pas des lignes (31) vers d'autres unités de fabrication (11.1 - 15.1) du dispositif (10).

10. Dispositif modulaire selon une ou plusieurs des revendications précédentes, **caractérisé en ce que** des lignes d'alimentation électrique (31) et/ou des lignes de commande (31) s'étendent entre l'armoire de distribution (11.2 - 15.2) et l'unité de fabrication (11.1 - 15.1) et/ou entre l'armoire de distribution (11.2 - 15.2) et la commande de machine de niveau supérieur, ces lignes reliant les composants électriques / électroniques de l'armoire de distribution (11.2 - 15.2) à l'unité de fabrication (11.1 - 15.1), en particulier à des composants électriques / électroniques de l'unité de fabrication (11.1 - 15.1) et/ou de la commande de machine, et **en ce que** les lignes (31) présentent respectivement dans la région de l'armoire de distribution (11.2 - 15.2) et/ou dans la région de l'unité de fabrication (11.1 - 15.1) et/ou dans la région de la commande de machine deux moyens de connexion connectés l'un à l'autre de façon séparable, en particulier deux parties de connexion d'une connexion à fiches (50).

11. Dispositif modulaire selon la revendication 10, **caractérisé en ce que** l'armoire de distribution (11.2 - 15.2) dans la position de transport est fixée de façon détachable à l'unité de fabrication (11.1 - 15.1), en particulier à une ou à l'enceinte (25) de l'unité de fabrication (11.1 - 15.1).

12. Module de fabrication pour un dispositif modulaire selon une ou plusieurs des revendications précédentes, avec une unité de fabrication (11.1 - 15.1) pour l'exécution d'au moins une étape de fabrication, ainsi qu'avec une armoire de distribution (11.2 - 15.2) distante de celle-ci, qui présente des composants électroniques ou électriques pour le fonctionnement de l'unité de fabrication (11.1 - 15.1), dans lequel une plate-forme (26) surélevée par rapport au niveau du sol (20) sur lequel l'unité de fabrication (11.1 - 15.1) est installée et formant un plancher (19) accessible pour un travailleur est disposée entre l'unité de fabrication (11.1 - 15.1) et l'armoire de distribution (11.2 - 15.2) du module de fabrication (11 - 15) respectivement associée à celle-ci,
**caractérisé en ce que** la plate-forme surélevée (26) est formée par un ou plusieurs élément(s) de plaque reposant sur au moins deux bras de support (28) de l'unité de fabrication (11.1 - 15.1) ou sur au moins deux bras de support (28) assemblés à celle-ci, et dans lequel dans une position de transport le côté inférieur de l'armoire de distribution (11.2 - 15.2) repose au moins localement sur au moins un élément de plaque reposant sur lesdits au moins deux bras de support (28) et est assemblé à celui-ci de façon détachable.
